# EUROPÄISCHE PATENTSCHRIFT

(11) **EP 2 508 429 B1**
(45) Veröffentlichungstag und Bekanntmachung des Hinweises auf die Patenterteilung: **14.09.2016**
(21) Anmeldenummer: 12161690.8
(22) Anmeldetag: 28.03.2012
(51) Int. Cl.: H02H 1/00, B64G 1/42, G06F 11/07

(54) **Verfahren zur raschen Notabschaltung von verteilten Anlagen und zugehörige Vorrichtung**
Method for rapid emergency deactivation of distributed assemblies and device
Procédé d'arrêt d'urgence rapide des installations réparties et dispositif associé

(30) Priorität: 08.04.2011 DE 102011007049
(43) Veröffentlichungstag der Anmeldung: 10.10.2012
(73) Patentinhaber: Siemens Convergence Creators GmbH, 1210 Wien (AT)
(72) Erfinder: Fuchs, Alfred, 2410 Hainburg/Donau (AT); Butas, Jan, 922 21 Moravany nad Váhom (SK)
(74) Vertreter: Maier, Daniel Oliver

(56) Entgegenhaltungen:
- EP-A2- 0 335 380
- EP-A2- 0 881 146
- DE-A1- 3 628 299
- DE-A1- 19 927 635
- US-A1- 2003 097 474
- US-A1- 2007 044 837
- US-B1- 6 324 484

## Beschreibung

### Technisches Gebiet

Die Erfindung betrifft ein Verfahren zur raschen Notabschaltung einer verteilten Anlage, insbesondere im Bereich der Satellitentechnik, sowie eine Vorrichtung zur Durchführung des erfindungsgemäßen Verfahrens. Eine verteilte Anlage besteht, dabei aus zumindest zwei Systemen, welche jeweils zumindest eine Notabschaltungskomponente aufweisen.

### Stand der Technik

Verteilte Anlagen bestehen üblicherweise aus einem Zusammenschluss mehrerer unabhängiger Systeme, welche sich für einen Benutzer als eine einzelne Anlage präsentieren, siehe DE 199 27 635. Von diesen Systemen wird zusammen gearbeitet bzw. über Nachrichten miteinander kommuniziert. Verteilte Anlagen sind beispielsweise im Bereich der Satellitentechnik zu finden.

So sind z.B. ein System für den Betrieb von Satelliten und/oder Systeme zum Testen von Satelliten als verteilten Anlagen aufgebaut. Meist umfassen derartige Anlagen mehrere, unterschiedliche Systeme wie z.B. Überwachungs- und Versorgungssystemen, dem Satelliten selbst, unterschiedlichen Energieversorgungssystemen (z.B. Spezialbatterien, Solarzellen-Felder, etc.) bzw. bei Testsystemen unterschiedliche Simulatoren für die verschiedenen Energieversorgungssysteme.

Bei derartigen verteilten Anlagen, bei welchen im Betriebs-oder insbesondere im Fehlerfall Gefahren für Menschen oder Schädigungen bei den einzelnen Systemen auftreten können, wird im Allgemeinen eine Vorrichtung zur Außerbetriebsetzung - eine so genannte Notabschaltung bzw. ein so genannter Not-Aus - vorgesehen.

Ein Not-Aus ist dabei üblicherweise ein Schalter oder eine Einrichtung, welche an einer Maschine, einem System, etc. vorgesehen ist, und welcher dazu dient, die Maschine, das System, etc. in einem Gefahrenfall, einem Fehlerfall oder zur Abwendung einer Gefahr möglichst rasch in einen sicheren Zustand zu versetzen. Ein derartiger Vorgang - d.h. ein Versetzen in einem sicheren Zustand wird dann üblicherweise als Notabschaltung bezeichnet. Bei einer verteilten Anlage ist es daher in einem Gefahren- und/oder Fehlerfall in einem System der Anlage häufig notwendig, die gesamte Anlage - d.h. alle Systeme der Anlage in einen sicheren Zustand zu versetzen, damit beispielsweise Schäden an den Systemen der Anlage verhindert werden. D.h. wird ein sicherheitsrelevantes Ereignis in einem System der Anlage festgestellt, werden auch die anderen Systeme der Anlage in einen sicheren Zustand übergeführt.

Andererseits ist es wichtig, dass es nicht zu Fehlauslösungen der Notabschaltung kommt, um den laufenden Betrieb bzw. ein Verfügbarkeit eines Systems bzw. einer Anlage nicht zu beeinträchtigen. Daher ist von einer Notabschaltungsvorrichtung neben einer raschen Reaktionszeit im Notfall auch immer eine gewisse Zuverlässigkeit gefordert, damit nicht durch Störungen bzw. Fehler beim Not-Aus oder der Notabschaltung z.B. in einem System einer verteilten Anlage einen Stillstand der gesamten Anlage ausgelöst werden. Vor allem bei komplexen Anlagen wie z.B. im Bereich der Satellitentechnik werden an diese Kriterien hohe Anforderungen gestellt, damit durch Fehler und/oder sicherheitsrelevante Ereignisse kein Schäden und/oder Störungen bei den meist sehr kostspieligen Systemen verursacht werden.

Um insbesondere bei verteilten Anlagen wie z.B. Satellitenanlagen oder Testanlagen für Satelliten im Fall eines sicherheitsrelevanten Ereignisses eine rasche Notabschaltung der gesamten Anlage zu erreichen, werden üblicherweise so genannte "Safety-Loops" oder "Sicherheitsschleifen" eingesetzt.

Bei Safety-Loops oder Sicherheitsschleifen im Bereich von Notabschaltungen in verteilten Anlagen werden beispielsweise so genannte Stromschleifen oder Stromschleifenschnittstellen wie z.B. die 20mA-Stromschleife nach der Norm DIN 66258 eingesetzt. Im einfachsten Fall ist bei einer Stromschleifenschnittstelle ein Sender oder Messwertgeber eine einstellbare Stromquelle und ein Empfänger besteht aus einem niederohmigen Abschluss- oder Messwiderstand, an welchem über den Spannungsabfall ein Messstrom bestimmt wird. Bei einer digitalen Übertragung wie z.B. bei der 20mA-Stromschleife werden dann anstatt verschiedener Spannungspegel ein Vorhandensein bzw. ein Nichtvorhandensein eines Stroms als Information ausgewertet. D.h. wird eine derartige Stromschleife für eine Notabschaltung in einer verteilten Anlage eingesetzt, so wird durch ein Not-Aus-Signal (z.B. Betätigen des Not-Aus-Schalters) in einem System der Stromfluss in der Stromschleife unterbrochen und damit die Notabschaltungen der anderen Systeme der Anlage initiiert.

Bei Stromschleifen - insbesondere bei den häufig eingesetzten, so genannten 20mA-Stromschleifen, bei welchen üblicherweise mit einem maximalen Leerlaufspannungspegel von 24 Volt gearbeitet wird - hat sich als nachteilig erwiesen, dass sie keine wirklich hohe Störungsempfindlichkeit insbesondere gegenüber Störungen kapazitiver und/oder induktiver Art aufweisen. Gegebenfalls können elektromagnetische Störungen wie z.B. so genanntes elektrisches Neben- oder Übersprechen zu Fehlfunktionen, etc. bei einer Notabschaltung führen. Weiters ist bei den üblicherweise eingesetzten Stromschleifen nachteilig, dass z.B. Integritätsprüfungen einer Notabschaltungsvorrichtung während des Betriebs der verteilten Anlage nur schwierig durchzuführen sind.

### Darstellung der Erfindung

Der Erfindung liegt daher die Aufgabe zugrunde, ein Verfahren sowie einen zugehörige Vorrichtung für eine Notabschaltung einer verteilten Anlage anzugeben, durch welche die verteilte Anlage möglichst rasch - gegebenenfalls annähernder in Echtzeit -, mit hoher Zuverlässigkeit und geringen Einfluss von Störungen in einen sicheren Zustand übergeführt werden kann, und durch welche auf einfache Weise eine Integritätsprüfung während des Betriebs ermöglicht wird.

Diese Aufgabe wird durch ein Verfahren sowie eine Vorrichtung der eingangs genannten Art mit den Merkmalen gemäß den unabhängigen Patentansprüchen gelöst. Vorteilhafte Ausführungsformen der vorliegenden Erfindung sind in den abhängigen Ansprüchen beschrieben.

Erfindungsgemäß erfolgt die Lösung der Aufgabe mit einem Verfahren der eingangs erwähnten Art, bei dem die Notabschaltungskomponenten der Systeme über eine Ringleitung seriell miteinander verbunden werden. Dann wird über die Ringleitung zwischen den Notabschaltungskomponenten der Systeme laufend ein kodiertes Signal übertragen. Wird bei einer Notabschaltung in einem der Systeme der verteilten Anlage das kodierte Signal geändert, so wird das geänderte, kodierte Signal für eine Notabschaltung von der der auslösenden Notabschaltungskomponente des auslösenden Systems an die Notabschaltungskomponenten der weiteren Systeme seriell über die Ringleitung übertragen.

Der Hauptaspekt des erfindungsgemäßen Verfahrens besteht darin, dass laufend ein kodiertes Signal über eine Ringleitung von einem System zum nächsten System der verteilten Anlage bzw. von einer Notabschaltungskomponente zur nächsten Notabschaltungskomponente übertragen wird. Wird von einer Notabschaltungskomponente in einem System der Anlage eine Notabschaltung ausgelöst, so wird das kodierte Signal verändert und das veränderte Signal an die nächste Notabschaltungskomponente bzw. das nächste System über die Ringleitung weitergeleitet. Das empfangende System wird einerseits in einen sicheren Zustand übergeführt und sendet andererseits mittels der entsprechenden Notabschaltungskomponente das Signal weiter an das nächste System, welches über die Ringleitung angebunden ist. Das Signal wird dabei solange weitergeleitet, bis alle Systeme der verteilten Anlage in einem sicheren Zustand sind.

Der Vorteil des erfindungsgemäßen Verfahrens besteht einerseits in einer konstanten bzw. geringen Latenzzeit der Signalübertragung, da das Signal z.B. in einem Takt der Notabschaltungskomponenten über die Ringleitung gesendet wird. Andererseits kann durch eine so genannte Multiplex-Übertragung (d.h. in das kodierte Signal sind mehrere Signale bzw. Informationen verpackt) des kodierten Signals auch eine laufende Integritätsprüfung der Ringleitung und gegebenenfalls auch der Notabschaltungskomponenten durchgeführt werden. Das kodierte Signal kann damit zusätzlich auf einfache Weise zum Testen bzw. für Diagnosezwecke der Ringleitung sowie der Notabschaltungskomponenten eingesetzt werden. Auch ist das erfindungsgemäße Verfahren durch die laufende und serielle Übertragung der Signale relativ störungsunempfindlich.

Es ist vorteilhaft, wenn eine Übertragung des kodierten Signals sowie Änderungen des Signals an die Systeme der verteilten Anlage seriell und bidirektional durchgeführt werden. Auf diese Weise können gegebenenfalls Unterbrechungen und Störungen in der Ringleitung leicht erkannt und umgangen werden.

Zweckmäßiger Weise wird das kodierte Signal zusätzlich für eine Übertragung zur Diagnose- und/oder für Tests der Ringleitung und/oder der Notabschaltungskomponenten genutzt. In das Signal können durch die Kodierungen zusätzlich Test- und/oder Diagnosesignale verpackt werden. Beispielweise kann für ein so genanntes Multiplex-Verfahren für die Übertragung des kodierten Signals genutzt werden. Dabei werden mit dem kodierten Signal mehrere Signal wie z.B. ein Signal für ein Notabschaltung, ein Testsignal, ein Diagnosesignal, etc. rasch über die Ringleitung von einer Notabschaltungskomponente zur nächsten bzw. von einem System zum nächsten System der verteilten Anlage laufend und seriell weitergeleitet.

Bei einer bevorzugten Fortbildung des erfindungsgemäßen Verfahrens wird für einen Aufbau und Änderungen des kodierten Signals, welches laufend über die Ringleitung übertragen wird, ein so genannter Komma-freier oder Präfix-Code verwendet. Als Komma-freier oder Präfix-Code wird ein Code bezeichnet, der so genannte Präfix-Eigenschaften erfüllt - d.h. kein Codewort des Codes ist Präfix eines anderen Codewortes. Bei einem Komma-freien bzw. Präfix-Code können daher Nachrichten bzw. Signale übertragen werden, welche eine Sequenz von mehreren zusammengehängten Kodewörtern darstellen. Dieser Code hat daher den Vorteil, dass das Signal immer eindeutig in die Codewörter zerlegbar ist und es keiner zusätzlichen Synchronisation zwischen sendenden und empfangenden Systemen bedarf.

Dabei wird idealer Weise für die Ringleitung ein faseroptischer Leiter wie z.B. Glasfasern eingesetzt. Durch den Einsatz eines faseroptischen Leiters für die Übertragung der Signale wird zusätzlich die Störungsempfindlichkeit gering gehalten, da z.B. Glasfasern für elektromagnetische Störungen relativ unempfindlich sind und Fehler durch elektrische Einstreuung damit vermieden werden. Zusätzlich weisen faseroptische Leiter eine hohe Datenübertragungsrate auf und können damit für eine sehr rasche Weiterleitung der kodierten Signale sorgen. Alternativ kann für die Ringleitung aber auch ein elektrischer Leiter (z.B. Kupferkabel) verwendet werden.

Anstatt des Komma-freien bzw. Präfix-Codes kann auch auf vorteilhafte Weise ein Kode nach dem RS-485-Standard für einen Aufbau und Änderungen des kodierten Signals eingesetzt werden. Als RS-485-Standard wird ein Schnittstellen-Standard für digitale leitungsgebundene, differentielle, serielle Daten- bzw. Signalübertragung bezeichnet, welcher sich aufgrund einer symmetrischen Signalübertragung durch eine hohe Toleranz gegenüber elektromagnetischen Störungen auszeichnet. Beim R-485-Standard wird vor allem ein Leitungspaar (z.B. Koaxialkabel) eingesetzt. Der Einsatz des R-485-Standards für das kodierte Signal stellt damit ebenfalls eine relativ störungsunempfindliche Variante zur sicheren und raschen Übertragung des Notabschaltungssignals in einer verteilten Anlage dar.

Die Lösung der Aufgabe erfolgt aber auch durch eine Vorrichtung der eingangs angeführten Art, welche zur Durchführung des erfindungsgemäßen Verfahrens einsetzbar ist, und bei welchem jedes System der verteilten Anlage eine Notabschaltungskomponente aufweist, welche dazu eingerichtet ist, ein kodiertes Signal zu erzeugen und bei einer Notabschaltung des jeweiligen Systems zu verändern, von anderen Systemen empfangene, kodierte Signale zu auszuwerten und das erzeugte und/oder veränderte, kodierte Signal sowie von anderen Systemen empfangene Signale weiterzuleiten. Weiters umfasst die erfindungsgemäße Vorrichtung eine Ringleitung zum Verbinden der Notabschaltungskomponenten der Systeme der verteilten Anlage.

Der Hauptaspekt der Vorrichtung zur Durchführung des Verfahrens zur raschen Notabschaltung einer verteilten Anlage besteht darin, dass auf einfache und rasche Weise die Systeme einer verteilten Anlage bei einem Notabschaltungsereignis in einen sicheren Zustand übergeführt werden können. Ein kodiertes Signal für eine Notabschaltung wird laufend über die Ringleitung von einem System zum nächsten System mit einer möglichst geringen Latenzzeit übertragen. Von den Notabschaltungskomponenten der Systeme wird dieses Signal laufend ausgewertet und bei einer Veränderung des Signals (z.B. durch eine Notabschaltung in einem System) kann die jeweilige Notabschaltungskomponente bzw. das zugehörige System entsprechend reagieren. Zusätzlich bietet eine laufende Übertragung des kodierten Signals ohne großen Aufwand die Möglichkeit z.B. mittels einer Multiplex-Übertragung mehrere Signale bzw. Codewörter in diesem Signal einer laufenden Integritätsprüfung der erfindungsgemäßen Vorrichtung. Aufgrund des Einsatzes einer Ringleitung weist die erfindungsgemäße Vorrichtung auch eine relative einfache elektronische Schaltung auf und ist damit einfach und kostengünstig zu realisieren.

Es ist vorteilhaft, wenn die Ringleitung aus einem faseroptischen Leiter ausgeführt ist, und wenn die Notabschaltungskomponente zum Interpretieren eines so genannten Komma-freien-Codes oder Präfix-Codes ausgelegt ist. Durch den Einsatz eines faseroptischen Leiter für die Ringleitung sowie eines Komma-freien bzw. Präfix-Codes ist die erfindungsgemäße Vorrichtung relativ unempfindlich gegenüber elektromagnetischen Störungen. Durch die hohe Datenübertragungsrate faseroptischer Leiter kann auf einfache Weise eine rasche und sichere Übertragung des kodierten Signals, insbesondere bei einer Notabschaltung, erzielt werden. Der Komma-freie Code weist zusätzlich noch den Vorteil auf, dass er immer eindeutig von den jeweiligen Notabschaltungskomponenten ausgewertet werden kann, und dass es keiner Synchronisation der Notabschaltungskomponenten der Systeme der verteilten Anlage bedarf.

Alternativ kann die Ringleitung aber auch aus einem elektrischen Leiter, insbesondere Kupferkabel, ausgeführt sei. Anstatt eines Komma-freien Codes kann dann vorteilhafter Weise auch ein Kode nach dem RS-485-Standard verwendet werden, zu dessen Interpretation die Notabschaltungskomponenten eingerichtet sind. Der RS-485-Standard stellt in Kombination mit einem Leitungspaar wie z.B. einem Koaxialkabel ebenfalls eine relativ elektromagnetisch robuste Übertragungsform für das kodierte Signal - besonders bei einer Notabschaltung - dar und kann daher auf einfache Weise eingesetzt werden, wenn die Verwendung von einem Komma-freien Code und/oder faseroptischen Leitern nicht möglich ist.

### Kurzbeschreibung der Zeichnung

Die Erfindung wird nachfolgend in beispielhafter Weise anhand der beigefügten Figuren erläutert. Es zeigen:
Figur 1 beispielhaft und schematisch eine Vorrichtung zur Durchführung eines Verfahrens zur raschen Notabschaltung einer verteilten Anlage anhand eines Beispiels aus der Satellitentechnik sowie einen Ablauf des Verfahrens
Figur 2 beispielhaft eine Tabelle eines kodierten Signals für eine Notabschaltung

### Ausführung der Erfindung

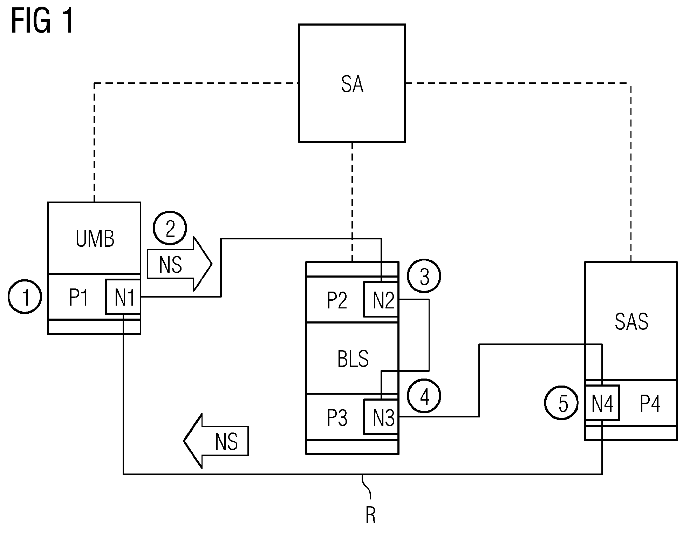

Figur 1 zeigt in beispielhafter und schematischer Weise die erfindungsgemäße Vorrichtung sowie das erfindungsgemäße Verfahren zur raschen Notabschaltung einer verteilten Anlage anhand einer beispielhaften Anlage zum Testen und Simulieren einer Leistungsversorgung eines Satelliten SA, wobei der Einfachheit halber nur die für die Erfindung wesentlichen Systeme der verteilten Anlage dargestellt sind.

Die verteilte Satellitentest-Anlage besteht aus mehreren Systemen, von welchen ein Versorgungsschnittstellen-System UMB, ein Simulationssystem einer Satelliten-Spezial-Batterie BLS und ein Solarzellenfeld-Simulationssystem SAS sowie ein zu testender Satellit SA dargestellt sind. Zusätzlich kann die Satellitentest-Anlage noch einen Simulator für pyrotechnische Elemente, welche bei einer Inbetriebnahme des Satelliten SA im All notwendig sind, sowie ein spezielles Steuer- und Kontrolleinheiten, welche Interaktion mit der Satellitentest-Anlage sowie einem zentralen Funktionsprüfungssystem - dem so genannten Core EGSE ermöglichen, umfassen. Diese zusätzlichen Systeme, Einheiten bzw. Schnittstellen sind der Einfachheit halber nicht dargestellt.

Vom Versorgungsschnittstellen-System UMB, welches auch als Umbilical Interface Unit UMB bezeichnet wird, wird Leistung und Antrieb für Versorgungsschnittstellen des Satelliten SA, welche den Satelliten SA über eine so genannte "Nabelschnur" bzw. Versorgungsleitung im Startgerät oder beim Prozess der Inbetriebnahme versorgen, zur Verfügung gestellt. Zusätzlich werden von dem Versorgungsschnittstellen-System UMB auch Onboard-Signale des Satelliten SA überwacht.

Mit dem Simulationssystem einer Satelliten-Spezial-Batterie BLS kann die Onboard-Batterie eines Satelliten SA elektrisch nachgestellt werden, solange die Spezial-Batterie noch nicht installiert ist. Vom Solarzellenfeld-Simulationssystem SAS kann die Energie, welche von den Solarzellenfeldern des Satelliten im Wirkbetrieb entsprechend einer Anzahl an Solarzellenfelder-Sektionen und deren Leistungscharakteristik erzeugt wird, nachgebildet werden und zusätzlich auch eine Sonnenfinsternis für den Satelliten SA simuliert werden, wenn sich der Satellit SA durch den Erdschatten bewegt.

Die in Figur 1 beispielhaft dargestellten Systeme UMB, BLS, SAS der verteilten Anlage umfassen jeweils zumindest ein so genanntes Schutzgerät P1, P2, P3, P4, da von diesen Systemen UMB, BLS, SAS der Anlage bei einem Test signifikante Leistungen, Ströme, etc. übertragen werden können. Die Schutzgeräte P1, P2, P3, P4 haben daher z.B. die Aufgabe, die anderen Komponenten der Anlage und insbesondere den Satelliten SA vor Schäden z.B. durch zu hohe Ströme, etc. zu schützen. In der dargestellten, beispielhaften Ausführungsvariante der erfindungsgemäßen Vorrichtung weisen z.B. das Versorgungsschnittstellen-System UMB und der Solarzellenfeld-Simulationssystem SAS jeweils ein Schutzgerät P1, P4 auf und das Simulationssystem einer Satelliten-Spezial-Batterie BLS umfasst zwei Schutzgeräte P2, P3, von welchen jeweils Teil des Systems BLS geschützt werden. Es sind aber auch andere Konstellationen je nach Bedarf der jeweiligen Anlage denkbar.

Die Schutzgeräte P1, P2, P3, P4 umfassen dabei - neben anderen für die gegenständliche Erfindung unerheblichen Komponenten und Funktionen - jeweils eine Notabschaltungskomponente N1, N2, N3, N4. Die Notabschaltungskomponente kann dabei aus einem so genannten Not-Aus-Schalter und einer Notabschaltungsfunktion bestehen. Durch den Not-Aus-Schalter wird eine Notabschaltung bzw. ein Überführen in einen sicheren Zustand des jeweiligen Systems UMB, BLS, SAS eingeleitet. Die Notabschaltungsfunktion dient dazu ein kodiertes Signal NS für eine Notabschaltung zu erzeugen bzw. diese Signal NS bei einer Notabschaltung des jeweiligen Systems zu verändern. Zusätzlich ist die Notabschaltungsfunktion bzw. dadurch die Notabschaltungskomponente N1, N2, N3, N4 dazu eingerichtet, von anderen Systemen UMB, BLS, SAS empfangene, kodierte Signale NS zu auszuwerten und ein erzeugte und/oder veränderte, kodierte Signal NS sowie von anderen Systemen UMB, BLS, SAS empfangene Signale NS weiterzuleiten.

Die Notabschaltungskomponente N1, N2, N3, N4 kann natürlich auch direkt am jeweiligen System UMB, BLS, SAS vorgesehen sein, wenn für die jeweilige verteilte Anlage ein Einsatz von speziellen Schutzgeräten P1, P2, P3, P4 zu aufwendig bzw. nicht sinnvoll ist. In der Satellitentechnik wird die Notabschaltungskomponente N1, N2, N3, N4 beispielsweise in ein spezielles Schutzgerät P1, P2, P3, P4 integriert, da wegen der empfindlichen und teueren Komponenten - vor allem wegen des Satelliten SA - weitere Schutz- und Sicherungsfunktionen notwendig sind.

Die Notabschaltungskomponente N1, N2, N3, N4 sind über eine Ringleitung R miteinander verbunden, welche idealer Weise zum Vermeiden von elektromagnetischen Störungen aus einem faseroptischen Leiter hergestellt ist. Über diese Leitung wird laufend seriell ein kodiertes Signal NS von einer ersten Notabschaltungskomponente N1 zu einer zweiten Notabschaltungskomponente N2, von dieser zu einer dritten Notabschaltungskomponente N3, etc. übertragen, bis von dem Signal NS wieder die erste Notabschaltungskomponente N1 erreicht wird. Dabei wird über die Ringleitung R eine sichere Kommunikation zwischen den Notabschaltungskomponenten N1, N2, N3, N4 durchgeführt.

Wird nun z.B. in einem ersten Verfahrensschritt 1 in der ersten Notabschaltungskomponenten N1 des Versorgungsschnittstellen-System UMB eine Notabschaltung ausgelöst, so wird das kodierte Signal NS, welche laufend seriell über die Ringleitung R übertragen wird, verändert. Von der erste Notabschaltungskomponente N1 wird dann das veränderte Signal NS in einem zweiten Verfahrensschritt 2 über die Ringleitung R an die zweite Notabschaltungskomponente N2 des Simulationssystems einer Satelliten-Spezial-Batterie BLS übertragen. In einem dritten Verfahrensschritt 3 wird dann das empfangende Signal NS von der zweite Notabschaltungskomponenten N2 ausgewertet und eine Notabschaltung erkannt. Dann wird von der zweiten Notabschaltungskomponente N2 ebenfalls ein Überführen eines zumindest Teilsystems des Simulationssystems einer Satelliten-Spezial-Batterie BLS in einen sicheren Zustand veranlasst und das Signal NS an die dritte Notabschaltungskomponente N3 weitergeleitet.

Von der dritten Notabschaltungskomponente N3 werden in einem vierten Verfahrensschritt 4 ebenfalls dieselben Prozesse wie im dritten Verfahrensschritt 3 durchgeführt und damit das restliche Teilsystem des Simulationssystems einer Satelliten-Spezial-Batterie BLS in eine sicheren Zustand übergeführt. Dann wird das Signal NS über die Ringleitung R an die vierte Notabschaltungskomponente N4 des Solarzellenfeld-Simulationssystem SAS übertragen und in einem fünften Verfahrensschritt 5 von dieser interpretiert. Wenn auch eine Notabschaltung bzw. ein Überführen in einen sicheren Zustand des Solarzellenfeld-Simulationssystem SAS durch die vierte Notabschaltungskomponenten N4 veranlasst worden ist, wird das Signal NS über die Ringleitung R wieder an das auslösende System UMB bzw. die auslösende Notabschaltungskomponenten N1 zurückgesendet.

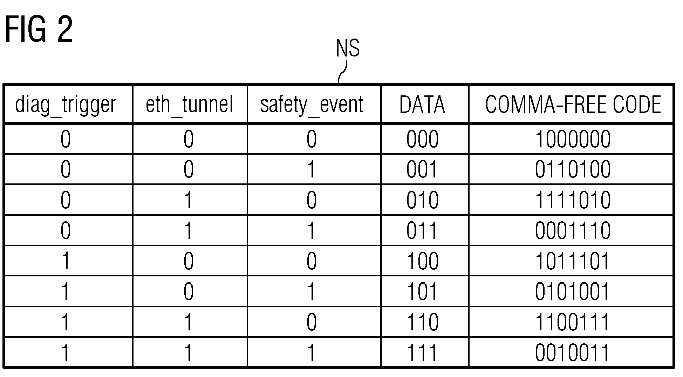

Für eine Kodierung des Signals NS wird dabei idealer Weise ein so genannter Komma-freier oder Präfix-Code verwendet, wobei ein möglicher Aufbau des Signals bzw. eine Abbildung verschiedener Zustände der Systeme UMB, BLS, SAS (z.B. Idealzustand, Störung, Notabschaltung, etc.) in Figur 2 dargestellt sind. Figur 2 zeigt eine Tabelle, welche mehrere Spalten umfasst. Eine erste Spalte diag_trigger beinhaltet ein Diagnosesignal, welche zum Prüfen der erfindungsgemäßen Vorrichtung eingesetzt werden kann. Eine zweite Spalte eth_tunnel zeigt ein Testsignal, welches beispielsweise zum Testen der Ringleitung R verwendet werden kann. Von der ersten und zweiten Spalte diag_trigger, eth_tunnel werden damit Signale umfasst, welche für eine so genannte Integritätsprüfung eingesetzt werden können.

Eine dritte Spalte safety event zeigt ein Signal für eine sicherheitsrelevantes Ereignis und damit für eine Notabschaltung. Aus den Signalen der drei Spalten diag_trigger, eth_tunnel und safety_event wird dann eine vierte Spalte DATA gebildet, welche alle drei Signale umfasst. Ein Datenwort der vierten Spalte DATA wird dann auf einen Komma-freien Code als Signal NS wie in einer fünften Spalte COMMA-FREE CODE der Tabelle in Figur 2 abgebildet, wobei eine oberste Zeile der Tabelle einen Idealzustand der verteilten Anlage bzw. der Notabschaltungskomponenten N1, N2, N3, N4 darstellt.

Das bedeutet das Signal NS mit einem Inhalt "1000000" wird als Idealzustand (z.B. keine Störung, kein Not-Aus, etc.) betrachtet und als Signal NS üblicherweise über die Ringleitung R von den Notabschaltungskomponenten N1, N2, N3, N4 gesendet. Wird nun - wie z.B. beim ersten Verfahrensschritt 1 in Figur 1 - ein sicherheitsrelevantes Ereignis festgestellt und damit eine Notabschaltung ausgelöst, so ändert sich ein Wert der dritten Spalte safety event z.B. von einem Wert 0 auf einen Wert 1. Dies hat zur Folge, dass auch das Signal NS von einem Inhalt "1000000" auf einen Inhalt "0110100" verändert wird. Damit wird von den anderen Notabschaltungsvorrichtungen N2, N3, N4, von welchen das derart veränderte Signal NS über die Ringleitung seriell empfangen wird, erkannt, dass z.B. eine Notabschaltung durchzuführen ist. Auf eine ähnliche Weise kann z.B. ein Test der Ringleitung R auf Störungen z.B. mit Hilfe der zweiten Spalte eth_tunnel oder ein Diagnose der Notabschaltungsvorrichtung z.B. mit Hilfe der ersten Spalte diag_trigger durchgeführt werden.

Der in Figur 2 beispielhaft dargestellt Komma-freie Code für das Signal NS umfasst sieben Zeichen, wobei ein Zeichen einen so genannten Safety-Reset darstellt. Ein derartiger Kommafreier Code weist den Vorteil auf, dass er immer eindeutig interpretierbar ist und es keiner Synchronisation zwischen den Systemen UMB, BLS, SAS bzw. den Notabschaltungskomponenten N1, N2, N3, N4 bedarf. Außerdem kann ein derart kodiertes Signal NS - insbesondere in Kombination mit einer Ringleitung R aus einem faseroptischen Leiter (z.B. Glasfaser) - sehr rasch und mit einer sehr geringen Latenzzeit übertragen werden. Für das in Figur 2 dargestellte Komma-Freie-Kode-Signal NS beträgt beispielsweise eine maximale Verzögerung nur sieben Zeichen.

## Patentansprüche

1. Verfahren zur raschen Notabschaltung einer verteilten Anlage, insbesondere im Bereich der Satellitentechnik, wobei die verteilte Anlage aus zumindest zwei Systemen (UMB, BLS, SAS) besteht, und wobei jedes System (UMB, BLS, SAS) der verteilten Anlage zumindest eine Notabschaltungskomponente (N1, ... N4) aufweist, **dadurch gekennzeichnet, dass** die Notabschaltungskomponenten (N1, ... N4) der Systeme (UMB, BLS, SAS) über eine Ringleitung (R) seriell miteinander verbunden werden, dass über die Ringleitung (R) zwischen den Notabschaltungskomponenten (N1, ... N4) der Systeme (UMB, BLS, SAS) laufend ein kodiertes Signal (NS) übertragen wird (2), dass bei einer Notabschaltung in einem der Systeme (UMB, BLS, SAS) der verteilten Anlage das kodierte Signal (NS) geändert wird (1), und dass dann das geänderte, kodierte Signal (NS) für eine Notabschaltung von der auslösenden Notabschaltungskomponente (N1) an die Notabschaltungskomponenten (N2, N3, N4) der weiteren Systeme (UMB, BLS, SAS) seriell über die Ringleitung (R) übertragen wird (3, 4, 5).

2. Verfahren nach Anspruch 1, **dadurch gekennzeichnet, dass** eine Übertragung des kodierten Signals (NS) sowie Änderungen des Signals (NS) an die Systeme (UMB, BLS, SAS) der verteilten Anlage seriell und bidirektional durchgeführt werden (2, 3, 4, 5).

3. Verfahren nach einem der Ansprüche 1 bis 2, **dadurch gekennzeichnet, dass** das kodierte Signal (NS) zusätzlich für eine Übertragung zur Diagnose- und/oder für Tests der Ringleitung (R) und/oder der Notabschaltungskomponenten (N1, ... N4) genutzt wird.

4. Verfahren nach einem der Ansprüche 1 bis 3 **dadurch gekennzeichnet, dass** für einen Aufbau und Änderungen des kodierten Signals (NS) ein so genannter Komma-freier oder Präfix-Code (COMMA-FREE CODE) verwendet wird.

5. Verfahren nach einem der Ansprüche 1 bis 4 **dadurch gekennzeichnet, dass** für die Ringleitung (R) ein faseroptischer Leiter eingesetzt wird.

6. Verfahren nach einem der vorangegangenen Ansprüche, **dadurch gekennzeichnet, dass** für einen Aufbau und Änderungen des kodierten Signals (NS) ein Code nach dem RS-485-Standard verwendet wird.

7. Verteilte Anlage zur Durchführung eines Verfahrens nach einem der Ansprüche 1 bis 6, wobei die verteilte Anlage aus zumindest zwei Systemen (UMB, BLS, SAS) besteht, und wobei jedes System (UMB, BLS, SAS) der verteilten Anlage zumindest eine Notabschaltungskomponente (N1, ... N4) aufweist, **dadurch gekennzeichnet, dass** die Notabschaltungskomponenten (N1, ... N4) der Systeme (UMB, BLS, SAS) dazu eingerichtet sind, ein kodiertes Signal (NS) zu erzeugen und bei einer Notabschaltung des jeweiligen Systems (UMS, BLS, SAS) zu verändern, von anderen Systemen (UMS, BLS, SAS) empfangene, kodierte Signale (NS) auszuwerten und das erzeugte und/oder veränderte, kodierte Signal (NS) sowie von anderen Systemen (UMB, BLS, SAS) empfangene Signale (NS) weiterzuleiten, und dass eine Ringleitung (R) zum Verbinden der Notabschaltungskomponenten (N1, ... N4) der Systeme (UMB, BLS, SAS) der verteilten Anlage vorgesehen ist.

8. Verteilte Anlage nach Anspruch 7 **dadurch gekennzeichnet, dass** die Ringleitung (R) aus einem faseroptischen Leiter ausgeführt ist, und dass die jeweilige Notabschaltungskomponente (N1, ... N4) zum Interpretieren eines so genannten Komma-frei-Codes oder Präfix-Codes ausgelegt ist.

9. Verteilte Anlage nach Anspruch 7, **dadurch gekennzeichnet, dass** die Ringleitung (R) aus einem elektrischen Leiter, insbesondere Kupferkabel, ausgeführt ist, und dass die jeweilige Notabschaltungskomponente zum Interpretieren eines Codes nach dem RS-485-Standard eingerichtet ist.

## Claims

1. Method for rapid emergency deactivation of a distributed assembly, in particular in the field of satellite technology, wherein the distributed assembly consists of at least two systems (UMB, BLS, SAS), and wherein each system (UMB, BLS, SAS) of the distributed assembly has at least one emergency deactivation component (N1, ... N4), **characterised in that** the emergency deactivation components (N1, ... N4) of the systems (UMB, BLS, SAS) are serially interconnected via a ring line (R), that a coded signal (NS) is continuously transferred (2) between the emergency deactivation components (N1, ... N4) of the systems (UMB, BLS, SAS) via the ring line (R), that the coded signal (NS) is changed (1) in the event of an emergency deactivation in one of the systems (UMB, BLS, SAS) of the distributed assembly, and that the changed coded signal (NS) for an emergency deactivation is then transferred (3, 4, 5) from the initiating emergency deactivation component (N1) to the emergency deactivation components (N2, N3, N4) of the further systems (UMB, BLS, SAS) serially via the ring line (R).

2. Method according to claim 1, **characterised in that** a transfer of the coded signal (NS) and changes of the signal (NS) to the systems (UMB, BLS, SAS) of the distributed assembly are performed serially and bidirectionally (2, 3, 4, 5).

3. Method according to one of the claims 1 to 2, **characterised in that** the coded signal (NS) is also used for a transfer for the purpose of diagnosing and/or testing the ring line (R) and/or the emergency deactivation components (N1, ... N4).

4. Method according to one of the claims 1 to 3, **characterised in that** a so-called comma-free code or prefix code (COMMA-FREE CODE) is used to construct and make changes to the coded signal (NS).

5. Method according to one of the claims 1 to 4 **characterised in that** an optical fibre conductor is used for the ring line (R).

6. Method according to one of the preceding claims, **characterised in that** a code according to the RS-485 standard is used to construct and make changes to the coded signal (NS).

7. Distributed assembly for performing a method according to one of the claims 1 to 6, wherein the distributed assembly consists of at least two systems (UMB, BLS, SAS), and wherein each system (UMB, BLS, SAS) of the distributed assembly has at least one emergency deactivation component (N1, ... N4), **characterised in that** the emergency deactivation components (N1, ... N4) of the systems (UMB, BLS, SAS) are so configured as to generate a coded signal (NS) and modify said signal (NS) in the event of an emergency deactivation of the respective system (UMS, BLS, SAS), to evaluate coded signals (NS) that are received from other systems (UMS, BLS, SAS), and to forward the generated and/or modified coded signal (NS) and signals (NS) received from other systems (UMB, BLS, SAS), and that a ring line (R) is provided for the purpose of connecting the emergency deactivation components (N1, ... N4) of the systems (UMB, BLS, SAS) of the distributed assembly.

8. Distributed assembly according to claim 7, **characterised in that** the ring line (R) takes the form of an optical fibre conductor, and that the respective emergency deactivation component (N1, ... N4) is so designed as to interpret a so-called comma-free code or prefix code.

9. Distributed assembly according to claim 7, **characterised in that** the ring line (R) takes the form of an electrical conductor, in particular copper cable, and that the respective emergency deactivation component is so configured as to interpret a code according to the RS-485 standard.

## Revendications

1. Procédé d'arrêt d'urgence rapide d'une installation répartie, notamment dans le domaine de la technique des satellites, l'installation répartie étant formée d'au moins deux systèmes (UMB, BLS, SAS) et chaque système (UMB, BLS, SAS) de l'installation répartie comprenant au moins une composante d'arrêt d'urgence (N1, ..., N4), **caractérisé en ce que** les composantes d'arrêt d'urgence (N1, ..., N4) des systèmes (UMB, BLS, SAS) sont reliées en série les unes aux autres par le biais d'une ligne en boucle (R), **en ce qu'**un signal codé (NS) est transmis en continu entre les composantes d'arrêt d'urgence (N1, ..., N4) des systèmes (UMB, BLS, SAS) par le biais de la ligne en boucle (R), **en ce que** le signal codé (NS) est modifié (1) en cas d'arrêt d'urgence dans un des systèmes (UMB, BLS, SAS) de l'installation répartie et **en ce que** le signal codé (NS) modifié utilisé pour un arrêt d'urgence est ensuite transmis en série (3, 4, 5) de la composante d'arrêt d'urgence déclenchante (N1) aux composantes d'arrêt d'urgence (N2, N3, N4) des autres systèmes(UMB, BLS, SAS) par le biais de la ligne en boucle (R).

2. Procédé selon la revendication 1, **caractérisé en ce qu'**une transmission du signal codé (NS) ainsi que des modifications du signal (NS) sont exécutées (2,3,4,5) en série et de manière bidirectionnelle au niveau des systèmes (UMB, BLS, SAS) de l'installation répartie.

3. Procédé selon l'une des revendications 1 à 2, **caractérisé en ce que** le signal codé (NS) est utilisé, en plus, pour une transmission à des fins de diagnostic et/ou de tests de la ligne en boucle (R) et/ou des composantes d'arrêt d'urgence (N1, ..., N4) .

4. Procédé selon l'une des revendications 1 à 3, **caractérisé en ce que** l'on utilise, pour une construction et des modifications du signal codé (NS), un code dit code sans virgule ou code à préfixe (COMMA-FREE CODE).

5. Procédé selon l'une des revendications 1 à 4, **caractérisé en ce que** l'on utilise un conducteur à fibre optique pour la ligne en boucle (R).

6. Procédé selon l'une des revendications précédentes, **caractérisé en ce que** l'on utilise, pour une construction et des modifications du signal codé (NS), un code selon la norme RS-485.

7. Installation répartie pour l'exécution d'un procédé selon l'une des revendications 1 à 6, l'installation répartie étant formée d'au moins deux systèmes (UMB, BLS, SAS) et chaque système (UMB, BLS, SAS) de l'installation répartie comprenant au moins une composante d'arrêt d'urgence (N1, ..., N4), **caractérisée en ce que** les composantes d'arrêt d'urgence (N1, ..., N4) des systèmes (UMB, BLS, SAS) sont conçues pour produire un signal codé (NS) et pour le modifier en cas d'arrêt d'urgence du système respectif (UMB, BLS, SAS), pour analyser des signaux codés (NS) reçus d'autres systèmes (UMB, BLS, SAS) et pour transférer le signal codé (NS) produit et/ou modifié ainsi que des signaux reçus d'autres systèmes (UMB, BLS, SAS), et **en ce qu'**une ligne en boucle (R) est prévue pour relier les composantes d'arrêt d'urgence (N1, ..., N4) des systèmes(UMB, BLS, SAS) de l'installation répartie.

8. Installation répartie selon la revendication 7, **caractérisée en ce que** la ligne en boucle (R) est formée par un conducteur à fibre optique et **en ce que** la composante d'arrêt d'urgence respective (N1, ..., N4) est conçue pour interpréter un code dit code sans virgule ou code à préfixe.

9. Installation répartie selon la revendication 7, **caractérisée en ce que** la ligne en boucle (R) est formée par un conducteur électrique, notamment un câble en cuivre, et **en ce que** la composante d'arrêt d'urgence respective est conçue pour interpréter un code selon la norme RS-485.
